Europäisches Patentamt

European Patent Office

Office européen des brevets

(19)

(11) Veröffentlichungsnummer: **0 496 864 B1**

(12) **EUROPÄISCHE PATENTSCHRIFT**

(45) Veröffentlichungstag der Patentschrift: **02.11.95**

(51) Int. Cl.6: **C09J 109/00**, C09K 3/10

(21) Anmeldenummer: **91914803.1**

(22) Anmeldetag: **23.08.91**

(86) Internationale Anmeldenummer:
**PCT/EP91/01597**

(87) Internationale Veröffentlichungsnummer:
**WO 92/03514 (05.03.92 92/06)**

(54) **WÄRMEHÄRTENDER KAUTSCHUK-KLEBSTOFF UND SEINE VERWENDUNG FÜR DEN AUTOMOBILROHBAU.**

(30) Priorität: **27.08.90 DE 4027064**

(43) Veröffentlichungstag der Anmeldung:
**05.08.92 Patentblatt 92/32**

(45) Bekanntmachung des Hinweises auf die Patenterteilung:
**02.11.95 Patentblatt 95/44**

(84) Benannte Vertragsstaaten:
**DE FR**

(56) Entgegenhaltungen:
**EP-A- 0 309 903**
**GB-A- 2 174 994**

(73) Patentinhaber: **Ems-Togo AG**
**Hofstrasse 31**
**CH-8590 Romanshorn (CH)**

(72) Erfinder: **JUD, Kurt**
**Im Reben**
**CH-8585 Schönenbaumgarten (CH)**

(74) Vertreter: **Deufel, Paul, Dr.**
**Müller-Boré & Partner**
**Patentanwälte**
**Grafinger Strasse 2**
**D-81671 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen temperaturstabilen, kataphoretisch beschicht- und wärmehärtbaren Kautschuk-Klebstoff, welcher sich insbesondere als Kleb- und Dichtstoff in der Automobilindustrie eignet.

Im Karrosseriebau der Automobilindustrie werden Klebstoffe für sehr unterschiedliche Anwendungen benötigt. Dabei müssen heute solche Klebstoffe einer Vielzahl von Anforderungen genügen.

Sie müssen insbesondere
- Mindestwerte der Zugscherfestigkeit und Bruchdehnung erreichen
- bei tiefen und hohen Temperaturen zu härten und
- ohne Vorgelierung auswaschbeständig gegen Spritzflüssigkeiten sein
- auf den verschiedensten, öligen Substraten einwandfrei haften
- kataphoretisch beschichtbar sein und
- einfache Applikation erlauben. d.h. rheologisch stabil und applikationsfreundlich sein, sowie
- halogenfrei sein

Die Vielfalt der Anforderungen machte es erforderlich, dass für die verschiedenen Anwendungen verschiedene Produkte eingesetzt werden mussten. Der Stand der Technik wird wiedergegeben durch:
- EP-PS 0 097 394
- EP-OS 0 309 903
- EP-OS 0 309 904
- EP-OS 0 256 316
- EP-OS 0 318 878
- DE-PS 3 834 818
- GB-OS 2 174 994

Keines der beschriebenen Materialien ist in der Lage, die erwähnten Forderungen an die heutigen Applikationen in vollem Umfang zu erfüllen. Ein Uneingeschränkter Einsatz desselben Materials für verschiedene Applikationen war somit bisher nicht möglich.

In der DE-PS 3 834 818 wird durch Einsatz OH-terminierter schwefelgehärteter Polybutadiene die Haftung des Klebstoffes auf den metallischen Untergründen gegenüber den Zusammensetzungen auf Basis nichtfunktioneller Polybutadiene, die mit Schwefel bzw. Schwefelverbindungen gehärtet werden, wie in EP-PS 0 097 394 und EP-OS 0 256 316 beschrieben, verbessert. Es hat sich gezeigt, dass ein mittleres Zugscherfestigkeitsniveau von 1,5 MPa nicht überschritten wird (Vergleichsbeispiel 2). Bei überhöhten Temperaturen, den sog. Überbrenntemperaturen, die infolge Stillstand oder unregelmässigem Lauf der Bandstrasse bei Lackieren der Automobil-Rohteile auftreten und bis zu 250°C erreichen können, tritt ein fortschreitender Abbau der Klebstoffeigenschaften durch Blasenbildung auf.

Die gemäss der EP-OS 0 318 878 durch den Einsatz verkappter Diisocyanate zusammen mit OH-terminierten Polybutadienen erreichbaren erhöhten Elastizitäten und Festigkeiten sinken bei 200°C übersteigenden Überbrenntemperaturen ebenfalls, da die Polyurethanvernetzung reversibel ist (Vergieichsbeispiel 4).

In den europäischen Patentanmeldungen 0 309 903 und 0 309 904 wird die Festigkeit, Haftung und Thermostabilität für Kautschuk-Kleber durch den Einsatz von Epoxidharz und Maleinsäureanhydrid, Vulkanisationssystem, zusammen mit flüssigen OH-funktionellen und nicht-funktionellen Polybutadienen erreicht. Die kataphoretische Beschichtbarkeit ist jedoch nicht gegeben.

In der GB-A-2 174 994 wird ein Dichtstoff für den Automobilbau beschrieben, der sich aus 100 Teilen eines nahezu 1:1 Gemischs von Bisphenol A-Epoxidharz und Bisphenol F-Epoxidharz, 40-80 Teilen einer Hilfs-Harz-Komponente, 25-40 Teilen eines reaktiven Synthesekautschuks, 60-150 Teilen eines schuppenförmigen Füllstoffs und 60-130 Teilen eines rostverhindernden Pigments zusammensetzt. Der beschriebene Dichtstoff eignet sich nicht für die kataphoretische Beschichtung.

Heute werden von den Anwendern Produkte verlangt, die sich für die verschiedensten Einsatzzwecke eignen, selbstverständlich mit allen entsprechenden physikalischen Eigenschaften, welche bei der jeweiligen Anwendung gefordert sind.

Die Aufgabe bestand somit in der Bereitstellung eines universell verwendbaren, für die kataphoretische Beschichtung geeigneten wärmehärtenden Klebstoffs für den Automobilrohbau, der thermostabil ist, d.h. bei überhöhter Lackiertemperatur nicht versagt.

Diese Aufgabe wird durch den Kautschuk-Klebstoff gemässAnspruch 1 und seine Verwendung gemäss Anspruch 9 gelöst. Die Erfindung betrifft somit insbesondere bis 250°C überbrennbare, wärmehärtende Klebstoffe auf Basis OH-terminierter, flüssiger Polybutadiene mit hohem Graphitgehalt.

Polybutadiene mit OH-Endgruppen sind sehr geeignet für einen doppelten Vernetzungsmechanismus, nämlich erstens für die Vernetzung über die Doppelbindungen mittels Schwefelvulkanisationssystem und

2

zweitens für die Vernetzung über die primären OH-Gruppen an den Kettenden mit der Epoxidverbindung. Erstaunlicherweise ist die Reaktion mit den Epoxygruppen so effizient und im Gegensatz zur Isocyanatvernetzung thermisch irreversibel, dass markante Festigkeitserhöhungen erzielt werden können und selbst sehr hohe Härtungs- oder Überbrenntemperaturen nicht zu negativen Erscheinungen führen, sondern die vorteilhaften Eigenschaften noch verstärken. Solche Butadien-Polymere sind handelsübliche Produkte mit einem Zahlenmittel der Molmassen von ca. 1000 bis 3500 und OH-Zahlen von 0.7 bis 1.7 meq./g und einem Anteil der trans-Isomeren im Bereich von 60%.

Die beiden Vernetzungsmechanismen, welche sich teilweise überlagern; lassen sich durch die Differentialkalorimetrie (DSC) eindeutig belegen.

In der nachstehenden Beschreibung beziehen sich die angegebenen Teile auf 100 Gew.-Teile funktionelles Polybutadienharz mit funktionellen Hydroxylgruppen im Bereich von 0.7 bis 1.7 meq/g und Molmassen zwischen etwa 1000 und 3500.

Der Einsatz von Polyepoxidverbindungen beschränkt sich auf 5 bis 30 Teile, besonders bevorzugt 10 bis 20 Teile, z.B. von Bisphenol-A-Diglycidyläther, Tetraglycidyl-isocyanurat und/oder Hexahydrophthalsäurediglycidylester welche durch den Zusatz von 20 bis 50 Teilen eines Kiebrigmacherharzes, z.B. auf Basis von butyliertem Terpenphenolharz, modifiziert sein können, wodurch die rheologischen, sowie die Zähigkeits- und Festigkeitseigenschaften verbessert und kohäsive Bruchbilder erreicht werden.

Polybutadien und Epoxidverbindungen sind dabei in einem Äquivalenz-Verhältnis der funktionellen Gruppen von 1:0.5 bis 1:1.5, vorzugsweise von 1:0.9 bis 1:1.1, enthalten.

Selbstverständlich können andere geeignete Epoxid- und Terpenphenolharze zum Einsatz gelangen oder weitere ungesättigte Polymere, wie zum Beispiel Polyoctenamer oder LIR (liquid isoprene rubber), zugemischt werden. Selbst Voraddukte von funktionellen, ungesättigten Kautschuken mit Epoxiden können als verstärkende, reaktive Komponente mitverwendet werden.

Die Vulkanisations- oder Härtersysteme, von denen 3 bis 35 Gew.- Teile, bevorzugt 20 bis 30 Gew.-Teile, verwendet werden, sind vorzugsweise aus Schwefel und handelsüblichen schwefelorganischen Härterverbindungen aus der Gruppe Thiocarbamate, Thiuramdisulfide, Thioharnstoffe, Thiazole, Thioguanidine im Mengenverhältnis 1:0,4 bis 1:1 zusammengesetzt.

Die elektrophoretische Beschichtbarkeit als Voraussetzung für eine noch bessere Bewitterungsbeständigkeit wird durch eine weitere, wesentliche Komponente in der erfindungsgemässen Kautschuk-Klebstoff Zusammensetzung, das Graphitpulver, erreicht, welches in erster Linie die Oberflächenleitfähigkeit des Produktes im Nasszustand so verändert, dass die elektrophoretische Lackierung über den applizierten Klebstoff gezogen werden kann. Andererseits können die rheologischen Eigenschaften, d.h. der Verlauf, der Abriss und die Pumpbarkeit optimal beeinflusst, abgestimmt und die störende Blasenbildung durch hohe Temperaturen vermieden werden.

Überraschenderweise ist der Einfluss des Graphits, dessen Anteil in den erfindungsgemässen Klebstoffen immerhin 50 bis 200 Teilen, bevorzugt 75 bis 100 Teile, beträgt, auf die Festigkeit im ausgehärteten Zustand nicht festzustellen. Die Zugscherfestigkeiten mit etwa 2.5 MPa und die Dehnungen von ca. 60 - 70%, entsprechen den heutigen Anforderungen der Automobilindustrie voll.

Als Füllstoffe werden bevorzugt mineralische, wie Calciumcarbonat, Calciumoxid, Zinkoxid usw. in Mengen von 50 bis 200 Gew.-Teilen, bevorzugt 100 bis 150 Gew.-Teilen, oft gemischt mit weiteren Hilfstoffen wie z.B. Alterungsschutzmittel oder Pigmenten, eingesetzt.

Damit ist die erfindungsgemässe Kautschuk-Klebstoff-Zusammensetzung im Temperaturbereich von 150° bis 250°C, bevorzugt von 160° bis 230°C uneitigeschränkt anwendbar, was vergleichsweise für Systeme des Standes der Technik nicht in diesem Umfang möglich ist.

Die erfindungsgemässe Kautschuk-Klebstoff-Zusammensetzung mit hohem Graphitanteil erfüllt somit die Aufgabenstellung, d.h. die Kombination von hoher Festigkeit und Dehnung über einen weiten Temperaturbereich, der auch stark überhöhte Temperaturen umfasst, was mit dem Zusammenwirken der zwei beschriebenen Vernetzungsmechanismen gedeutet wird, mit optimaler Haftung auf allen bekannten Automobilsubstraten, günstigen rheologischen Applikationseigenschaften bei Verarbeitungstemperaturen bis 70°C, mit optimaler Lagerstabilität und der Lackierungsfähigkeit im Kataphorese-Tauchbad und ist damit für die Verwendung zur Herstellung von Kleb- und Dichtstoffen im Automobilrohbau bestens geeignet.

In den folgenden Beispielen werden Resultate mit und ohne Doppel-Vernetzungsmechanismus dargelegt. Die Werte geben Gewichtsteile wieder. Die Beispiele haben illustrativen Charakter, sind also nicht als limitierend zu betrachten.

Tabelle 1

BEISPIELE

(ANGABEN IN GEWICHTSTEILEN)

| Komponenten | Beispiel 1 | Beispiel 2 analog DE 3834818 | Beispiel 3 analog EP 0309904 | Beispiel 4 analog EP 0318878 |
|---|---|---|---|---|
| POLYÖL 130[2] | --- | --- | 100 | --- |
| POLY-BD R-45 HT[1] | 100 | 100 | --- | 100 |
| DER 330[3] | 17.9 | --- | 17.9 | --- |
| IPDI-Addukt BF 1540[11] | --- | --- | --- | 13.4 |
| KW 11[4] | 37.3 | 37.3 | 37.3 | 37.3 |
| KS 44[5] | 89.5 | 89.5 | 89.5 | 89.5 |
| Calciumcarbonat | 116.4 | 116.4 | 116.4 | 116.4 |
| Calciumoxid | 23.9 | 23.9 | 23.9 | 23.9 |
| Zinkoxid | 6.0 | 6.0 | 6.0 | 6.0 |
| Schwefel[6] | 16.4 | 16.4 | 16.4 | 16.4 |
| VULKAZIT DMC[7] | 6.0 | 6.0 | 6.0 | 6.0 |
| VULKAZIT LDBC[8] | 0.56 | 0.56 | 0.56 | 0.56 |
| THIURAM C[9] | 0.37 | 0.37 | 0.37 | 0.37 |
| VULKANOX CS[10] | 3.3 | 3.3 | 3.3 | 3.3 |

(1)  Ungesättigtes, funktionelles Polybutadienharz/ATOCHEM.

(2)  Ungesättigtes Polybutadienharz/HÜLS.

(3)  Epoxidharz (Bisphenol-A-Diglycidyläther, Äquivalentgewicht ca. 190/DOW CHEMICAL.

(4)  Klebrigmacherharz/Terpenphenolharz/Verkaufsgesellschaft für Teererzeugnisse m.b.H.

(5)  Graphitpulver/LONZA.

(6)  RHENOCURE S 90-20/RHEIN-CHEMIE

(7)  Benzothiazyl-disulfid/BAYER.

(8) Zink-dibutyldithiocarbamat/BAYER.

(9) Thiuram-disulfid/BAYER.

(10) Alterungsschutzmittel/BAYER.

(11) Verkapptes Diisocyanat/HÜLS (mit Verhältnis der funktionellen Gruppen OH:NCO=1:0.6)

Tabelle 2

| ZUGSCHER-FESTIGKEITEN (MPa) BEI VERSCHIEDENEN EINBRENNTEMPERATUREN UND 30 MINUTEN EINBRENNDAUER | | | | |
|---|---|---|---|---|
| Einbrenntemperaturen | Beispiel 1 | Beispiel 2 | Beispiel 3 | Beispiel 4 |
| 160°C | 1.6 | 1.4 | 0.3 | 2.0 |
| 170°C | 1.9 | 1.2 | 0.7 | 2.3 |
| 180°C | 2.4 | 1.2 | 1.0 | 2.1 |
| 190°C | 2.7 | 1.3 | 1.2* | 1.0* |
| 200°C | 2.5 | 1.3 | 1.2* | 0.9* |
| 210°C | 2.5 | 1.4* | 0.8* | |
| 220°C | 2.3 | 1.3* | 0.7* | 0.6* |
| 230°C | 2.3 | 1.3* | 0.5* | |

* Blasenbildung

Tabelle 3

| BRUCHDEHNUNGEN (%) BEI VERSCHIEDENEN EINBRENNTEMPERATUREN UND 30 MINUTEN EINBRENNDAUER | | | | | | | |
|---|---|---|---|---|---|---|---|
| Beisp. | 160°C | 170°C | 180°C | 190°C | 200°C | 210°C | 220°C |
| 1 | 45 | 68 | 65 | 65 | 58 | 50 | 40 |
| 4 | | | 50 | | | | |

Testkonditionen: Die Zugscherprüfungen wurden nach der für Peugeot/Citroën/Talbot gültigen PSA-Norm D 41 1108 durchgeführt. Die Bleche für die Zugscherprüfungen haben folgende Dimensionen: 25x100x0.75mm, die Überlappung 20mm und die Dicke 2mm. Die Abzugsgeschwindigkeit beträgt 10mm/min, die Temperatur 23°C.
Die Bruchdehnungen wurden anhand der DIN-Norm 53455 bestimmt.

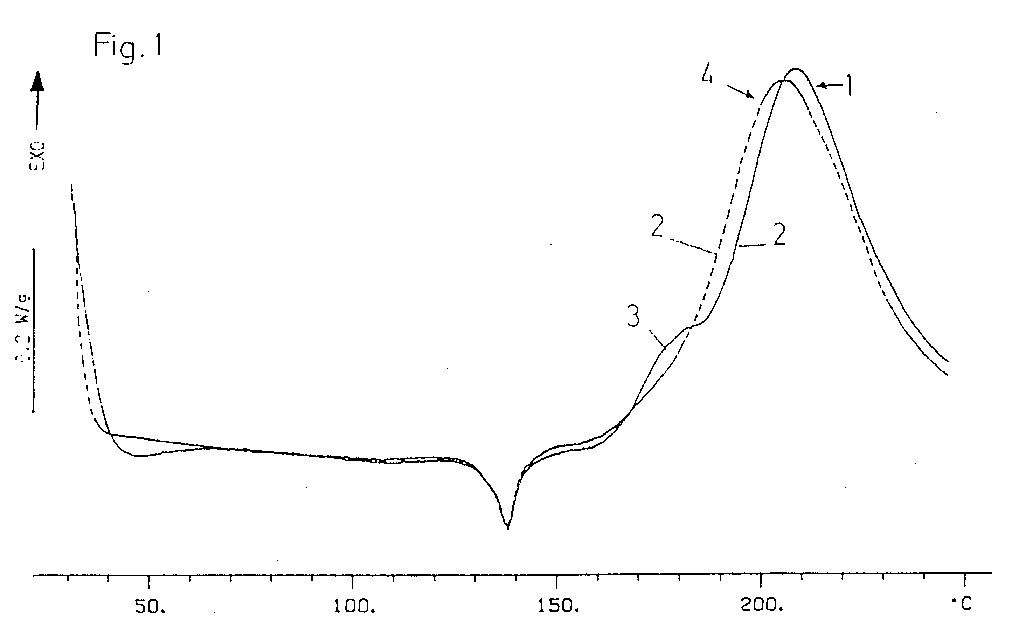

- Figur 1; DSC-Kurven von Beispiel 1 und 3.
Figur 1 zeigt den DSC-Kurvenverlauf einer doppelten Vernetzungsreaktion (1) mit Vulkanisation durch Schwefel (2) und Epoxid/OH-Gruppen-Reaktion (3) an einem Kautschuk-Kleber gemäss Beispiel 1 und im Vergleich den Kurvenverlauf bei einfacher Vulkanisation (4) durch Schwefel (2) an einem nichterfindungsgemässen Kautschuk-Kleber gemäss Beispiel 3. Die Kurven wurden mit einem Gerät der Fa. Mettler mit 15°C/min Aufheizrate aufgenommen, wobei die exotherme Leistungsaufnahme in Watt pro Gramm und die Temperatur in Grad Celsius angegeben wird.

## Patentansprüche

1. Wärmehärtender, kataphoretisch beschichtbarer Kautschuk-Klebstoff, dadurch gekennzeichnet, dass er aus
a) 100 Gewichtsteilen OH-funktionellem Polybutadien mit einem Zahlenmittel der Molmasse von ca. 1000 bis 3500 und OH-Zahlen von 0.7 to 1.7 meq./g
b) 5 bis 30 Gewichtsteilen mindestens einer polyfunktionellen Epoxidverbindung

EP 0 496 864 B1

c) 3 bis 35 Gewichtsteilen eines Schwefelvulkanisationssystems aus Schwefel und mindestens einem üblichen Vulkanisationsbeschleuniger im Verhältnis 1:0,4 bis 1:1
d) 50 bis 200 Gewichtsteilen Graphitpulver und
e) 50 bis 200 Gewichtsteilen üblichen, insbesondere mineralischen Füllstoffen und gegebenenfalls weiteren Additiven, besonders stabilisatoren
f) 20 bis 50 Gewichtsteilen Klebrigmacherharzen besteht.

2. Wärmehärtender Klebstoff nach Anspruch 1 dadurch gekennzeichnet, dass Polybutadien und Epoxidverbindungen in Mengen entsprechend einem Äquivalenz-Verhältnis der funktionellen Gruppen von 1 : 0.5 bis 1 : 1.5, vorzugsweise 1 : 0.9 bis 1 : 1.1 enthalten sind.

3. Wärmehärtender Klebstoff nach einem der Ansprüche 1 oder 2, dadurch gekennzeichnet, dass die Epoxide aus der von Bisphenol-A-Diglycidyläther, Tetraglycidyl-isocyanurat, Hexahydrophtalsäurediglycidylester gebildeten Gruppe ausgewählt sind.

4. Wärmehärtender Klebstoff nach einem der Ansprüche 1 bis 3, dadurch gekennzeichnet, dass das Schwefelvulkanisations system aus einem Gemisch aus Schwefel und organischen Schwefelverbindungen wie Thiocarbamaten, besonders Alkyl-dithiocarbamat, Disulfiden, besonders Thiuramdisulfid, Thioharnstoffen oder Thiazolen, besonders Thiazyldisulfid besteht.

5. Wärmehärtender Klebstoff nach Anspruch 4, dadurch gekennzeichnet, dass er Schwefel und Vulkanisationsbeschleuniger in Gewichtsverhältnissen von 1 : 0.4 bis 1 : 1 enthält.

6. Wärmehärtender Klebstoff nach einem der Ansprüche 1 bis 5, dadurch gekennzeichnet, dass er auf 100 Gewichtsteile Hydroxylgruppen enthaltendes Polybutadien, 10 bis 25 Gewichtsteile Schwefel und Vulkanisationsbeschleuniger, sowie 75 bis 100 Gewichtsteile Graphit und 100 bis 150 Teile Füllstoffe, Pigmente und/oder Hilfsstoffe besonders Alterungsschutzmittel und gegebenenfalls zur Modifizierung Klebrigmacherharze enthält.

7. Wärmehärtender Klebstoff nach Anspruch 6, dadurch gekennzeichnet, dass die Klebrigmacherharze auf der Basis von Terpenphenolharzen beruhen und 20 bis 50 Gewichtsteile, bezogen auf 100 Gewichtsteile Hydroxylgruppen enthaltendes Polybutadien, sind.

8. Wärmehärtender Klebstoff nach einem der voranstehenden Ansprüche, dadurch gekennzeichnet, dass die Klebrigmacherharze Harze auf Basis des butylierten Terpenphenolharzes sind und weitere ungesättigte Polymere oder Voraddukte von ungesättigten funktionellen Kautschuken mit Epoxid enthalten können.

9. Verwendung des Kautschuk-Klebstoffs gemäss einem der voranstehenden Ansprüche zur Herstellung von Kleb- und Dichtstoffen für den Automobilrohbau.

**Claims**

1. Heat-curing cataphoretically-coatable rubber adhesive, characterised in that it comprises
   a) 100 parts by weight of OH-functional polybutadiene with a number average of the molar mass of c.11,000 to 3,500 and an OH number of 0.7 to 1.7 meq/g
   b) 5 to 30 parts by weight of at least one polyfunctional epoxide compound
   c) 3 to 35 parts by weight of a sulphur vulcanisation system of sulphur and at least one conventional vulcanisation accelerator in a ratio of 1:0.4 to 1:1
   d) 50 to 200 parts by weight of graphite powder and
   e) 50 to 200 parts by weight of conventional, in particular mineral, fillers and optionally further additives, especially stabilisers
   f) 20 to 50 parts by weight of tackifier resins.

2. Heat-curing adhesive according to claim 1, characterized in that polybutadiene and epoxide compounds are contained in amounts corresponding to an equivalence ratio of the functional groups of preferably 1:0.9 to 1:1.1.

6

3. Heat-curing adhesive according to one of claims 1 or 2, characterized in that the epoxides are selected from groups formed from bisphenol-A-diglycidyl ether, tetraglycidyl isocyanurate and hexahydrophthalic acid diglycidyl ester.

4. Heat-curing adhesive according to one of claims 1 to 3, characterized in that the sulphur vulcanisation system comprises a mixture of sulphur and organic sulphur compounds such as thiocarbamates, in particular alkyldithiocarbamate, disulphides, in particular thiuram disulphide, thioureas or thiazoles, in particular thiazyl disulphide.

5. Heat-curing adhesive according to claim 4, characterised in that sulphur and vulcanisation accelerator are contained in a ratio by weight of 1:0.4 to 1:1.

6. Heat-curing adhesive according to one of claims 1 to 5, characterized in that it contains 10 to 25 parts by weight of sulphur and vulcanisation accelerator as well as 75 to 100 parts by weight of graphite and 100 to 150 parts of fillers, pigments and/or auxiliaries, in particular anti-ageing agents and optionally modifying tackifier resin, for each 100 parts by weight of hydroxyl group-containing polybutadiene.

7. Heat-curing adhesive according to claim 6, characterised in that the tackifier resins are based on terpene phenolic resins and are 20 to 50 parts by weight, based on 100 parts by weight of hydroxyl group-containing polybutadiene.

8. Heat-curing adhesive according to one of the preceding claims, characterised in that the tackifier resins are resins based on the butylated terpene phenolic resin and optionally contain further unsaturated polymers or preadducts of unsaturated functional rubbers with epoxide.

9. Use of the rubber adhesive according to one of the preceding claims for the production of adhesives and sealants for car body building.

**Revendications**

1. Matériau adhésif thermodurcissable à base de caoutchouc, que l'on peut étaler en couche par cataphorèse, caractérisé en ce qu'il est constitué de :
   a) 100 parties en poids d'un polybutadiène à groupes fonctionnels hydroxy, dont la masse molaire moyenne en nombre vaut à peu près de 1000 à 3500 et dont l'indice d'hydroxyle vaut de 0,7 à 1,7 meq/g,
   b) 5 à 30 parties en poids d'au moins un composé polyfonctionnel de type époxyde,
   c) 3 à 35 parties en poids d'un système de vulcanisation au soufre, constitué de soufre et d'au moins un accélérateur habituel de vulcanisation, présents en un rapport de 1/0,4 à 1/1,
   d) 50 à 200 parties en poids de graphite en poudre,
   e) 50 à 200 parties en poids de charges habituelles, en particulier minérales, et d'autres adjuvants éventuels, en particulier de stabilisants, et
   f) 20 à 50 parties en poids de résines conférant une certaine adhésivité.

2. Matériau adhésif thermodurcissable, conforme à la revendication 1, caractérisé en ce qu'il contient un polybutadiène et des composés de type époxyde en des quantités telles que le rapport des équivalents de groupes fonctionnels vaut de 1/0,5 à 1/1,5, et de préférence de 1/0,9 à 1/1,1.

3. Matériau adhésif thermodurcissable, conforme à l'une des revendications 1 et 2, caractérisé en ce que les époxydes sont choisis dans l'ensemble formé par l'éther diglycidylique de bisphénol A, l'isocyanurate de tétraglycidyle, et l'hexahydrophtalate de diglycidyle.

4. Matériau adhésif thermodurcissable, conforme à l'une des revendications 1 à 3, caractérisé en ce que le système de vulcanisation au soufre est constitué d'un mélange de soufre et de composés organiques soufrés conune des thiocarbamates, en particulier des dithiocarbamates d'alkyle, des disulfures, en particulier des disulfures de thiurame, des thiourées ou des thiazoles, en particulier des disulfures de thiazyle.

7

**5.** Matériau adhésif thermodurcissable, conforme à la revendication 4, caractérisé en ce qu'il contient du soufre et un accélérateur de vulcanisation en un rapport pondéral de 1/0,4 à 1/1.

**6.** Matériau adhésif thermodurcissable, conforme à l'une des revendications 1 à 5, caractérisé en ce qu'il contient, pour 100 parties en poids de polybutadiène à groupes hydroxy, de 10 à 25 parties en poids de soufre et d'accélérateur de vulcanisation, ainsi que de 75 à 100 parties en poids de graphite et de 100 à 150 parties de charges, pigments et/ou adjuvants, notamment des agents de protection contre le vieillissement, et le cas échéant, de résines conférant une certaine adhésivité aux fins de modification.

**7.** Matériau adhésif thermodurcissable, conforme à la revendication 6, caractérisé en ce que les résines conférant une certaine adhésivité sont à base de résines de terpènes et de phénols et représentent de 20 à 50 parties en poids pour 100 parties en poids de polybutadiène à groupes hydroxy.

**8.** Matériau adhésif thermodurcissable, conforme à l'une des revendications précédentes, caractérisé en ce que les résines conférant une certaine adhésivité sont à base de résines butylées de terpènes et de phénols et peuvent contenir d'autres polymères insaturés ou des produits d'addition préalable d'époxydes sur des caoutchoucs insaturés fonctionnalisés.

**9.** Utilisation des matériaux adhésifs à base de caoutchouc, conformes à l'une des revendications précédentes, pour la fabrication de matériaux adhésifs et d'étanchéité destinés à la carrosserie automobile.

Fig.1

EXO

EP 0 496 864 B1